Europäisches Patentamt

European Patent Office

Office européen des brevets

(19)

(11) EP 1 185 079 A2

(12) EUROPÄISCHE PATENTANMELDUNG

(43) Veröffentlichungstag:
06.03.2002  Patentblatt 2002/10

(51) Int Cl.7: H04N 1/409, H04N 1/58

(21) Anmeldenummer: 01117924.9

(22) Anmeldetag: 24.07.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 25.08.2000  DE 10041750

(71) Anmelder: Agfa-Gevaert AG
51373 Leverkusen (DE)

(72) Erfinder:
• Groschup, Thomas
  83026 Rosenheim (DE)
• Schuhrke, Thomas
  81549 München (DE)

(54) **Auf- oder Durchlichtscanner und Bildverarbeitungsverfahren für eingescannte Bildvorlagen**

(57)    Die Erfindung geht aus von einem Auf- oder Durchlichtscanner mit einer Beleuchtungseinrichtung zum Beleuchten von Bildmaterial, einem Träger zum Halten des Bildmaterials und einer Aufnahmeeinrichtung zum Aufnehmen des durch das Bildmaterial durchtretenden Lichts und zur pixelweisen Umwandlung des Lichts in elektrische Signale, mit der Bildsignale in mehreren Farben und ein Defektsignal erzeugbar sind.

Der erfindungsgemäße Auf- oder Durchlichtscanner besitzt eine Speichereinrichtung zum pixelweisen Abspeichern von Bild- und Defektsignalen, eine Recheneinrichtung zum Erzeugen von Tiefpasssignalen aus den Bildsignalen, eine Speichereinrichtung zum pixelweisen Abspeichern der Tiefpasssignale und eine Korrektureinrichtung zum Auswählen zwischen Bildsignal und Tiefpasssignal oder eine Kombination aus Bild- und Tiefpasssignal eines Pixels in Abhängigkeit von dem Wert oder der Position des Defektsignals des entsprechenden Pixels.

FIG.3

EP 1 185 079 A2

## Beschreibung

Die Erfindung geht aus von einem Auf- oder Durchlichtscanner und einem Bildverarbeitungsverfahren nach dem Oberbegriff von Anspruch 1 bzw. Anspruch 10.

Beim Abtasten von Bildvorlagen zeigen sich im abgetasteten Bild oft Defekte, welche verschiedene Ursachen haben. Diese Defektstellen können z. B. von Streuung des Abbildungslichts an Kratzern in der Vorlage herrühren. Sie können auch von Staub oder anderen Partikeln, welche sich auf der Vorlage oder auf der Bildaufnahmevorrichtung befinden, oder durch Fehlstellen in der abbildenden Optik oder der Aufnahmevorrichtung verursacht werden.

Um derartige Defekte im Bild zu korrigieren, wurden bereits mehrere Verfahren vorgeschlagen.

Die US 4,680,638 beschreibt ein Verfahren, bei dem ein Infrarotscan zur Defektkorrektur bei einem Videofilm verwendet wird. Der mittels des Infrarotscans erkannte Defekt wird entweder durch Ersetzen der Bildinformation durch Information eines vorherigen Bildes des Films oder durch Interpolation der defekten Stelle korrigiert. Das Ersetzen der defekten Bildstellen durch die Information aus dem vorherigen Bild ist jedoch nur für Videofilme, bei denen nahezu dasselbe Bild mehrfach aufgenommen wird, praktikabel. Das Interpolations-Verfahren ist auch für Einzelbildscanner geeignet, allerdings ist es sehr rechenzeitaufwendig, da jedes einzelne defekte Pixel zusammen mit Nachbarpixeln betrachtet werden muss.

Die US 5,266,805 beschreibt ebenfalls ein Defektkorrekturverfahren, welches auf der Aufnahme eines Infrarotsignals zusätzlich zu den Rot-, Grün- und Blausignalen beruht. Aus den Infrarotsignalen sind Position und Stärke der Defekte bekannt. In diesem Verfahren wird vorgeschlagen, leichte Defekte - also Defekte, deren Infrarotsignal unterhalb eines bestimmten Schwellwerts liegt - dadurch zu korrigieren, dass die Bildsignale durch das Infrarotsignal dividiert werden. Stärkere Defekte, bei denen keine Farbinformation mehr erkannt werden kann, werden durch Interpolation beseitigt. Auch bei diesem Korrekturverfahren ist die Interpolation sehr rechenzeitaufwendig und verhindert damit eine schnelle Bearbeitung der eingescannten Bilder.

In der noch nicht veröffentlichten DE 100 29 826.5 wird vorgeschlagen, anstelle des Infrarotscans zusätzlich zu den drei Farbscans der Bildvorlage eine weitere Aufnahme in einem zusätzlichen Spektralbereich durchzuführen. Dieser zusätzliche Defektscan wird dann mit den Bildsignalen in den drei Farben verrechnet, um dadurch die Defekte zu eliminieren. Auch dieses Verfahren ist sehr rechenaufwendig und außerdem filmtypabhängig.

Da heutzutage gerade in fotografischen Großlabors, aber auch bei einfachen Flachbett-Scannern, die Anforderung besteht, möglichst viele Bilder in möglichst kurzer Zeit bei hochwertiger Qualität zu erzeugen, sind sehr rechenzeitaufwendige Bildverarbeitungsverfahren nicht praktikabel.

Es war deshalb Aufgabe der vorliegenden Erfindung, einen Auf- oder Durchlichtscanner und ein Bildverarbeitungsverfahren so auszugestalten, dass eine Defektkorrektur sehr schnell und mit geringem Ressourcenaufwand bei gleichbleibender Bildqualität gewährleistet wird.

Gelöst wird die Aufgabe von einem Auf- oder Durchlichtscanner mit den Merkmalen von Anspruch 1 und einem Bildverarbeitungsverfahren mit den Merkmalen von Anspruch 10.

Erfindungsgemäß werden Pixel, welche im eingescannten Bild als defekt erkannt wurden, durch das Tiefpasssignal des Bildsignals oder eine Kombination aus Bild- und Tiefpasssignal ersetzt. Ein Defekt, der beispielsweise von einem Kratzer oder von Staub auf der Bildvorlage herrührt, tritt in der Regel auf dem eingescannten Bild als lokale, schmale Dichteabweichung auf. Im allgemeinen handelt es sich hierbei also um eine lokal sehr begrenzte, aber intensive Dichteschwankung. Eine derartige Dichteschwankung wird bei einer Tiefpassfilterung des Bildsignals nahezu eliminiert, da sie als Detailinformation eher im hochfrequenten Anteil des Bildsignals wiedergegeben wird. Das Tiefpasssignal enthält also das über den Defekt hinweggeglättete Bildsignal. Sobald ein Pixel anhand des Wertes seines Defektsignals als defekt erkannt worden ist, kann das Bildsignal durch das Tiefpasssignal ersetzt werden.

Oftmals ist es sinnvoll, das defekte Bildsignal - insbesondere im Übergangsbereich von Defekt und Bild - durch eine Kombination aus Bild- und Tiefpasssignal zu ersetzen, da damit ein glatterer Übergang zwischen benachbarten, nicht defekten Pixeln, deren Bildsignal erhalten bleibt, und defekten Pixeln, deren Bildsignal ersetzt wird, gewährleistet werden kann. Der Verlauf des Einsetzens von reinem Tiefpass-, Kombination aus Bild- und Tiefpass- und Bildsignal über den Defekt kann durch eine von Position und evtl. Stärke des Defektes abgeleitete Funktion $\alpha$ vorgegeben werden.

Ein erfindungsgemäßer Auf- oder Durchlichtscanner weist Beleuchtungseinrichtungen zum Beleuchten von Vorlagen, Vorlagenhalter sowie Aufnahmeeinrichtungen zum Aufnehmen der abgebildeten Vorlagen und zur Umwandlung der aufgenommenen Bildsignale in elektrische Signale auf. Ein derartiger Scanner ermöglicht die Aufnahme von Bildsignalen in mehreren Farben - vorzugsweise in Rot, Grün und Blau - sowie die Aufnahme eines Defektsignals. Es kann sich aber auch um einen Schwarz-Weiß-Scanner handeln, der nur ein Bild- und ein Defektsignal aufnimmt. Die aufgenommenen Bildsignale werden in einer Recheneinrichtung tiefpassgefiltert und Bildsignale, Tiefpasssignale sowie Defektsignale werden abgespeichert, so dass sie pixelweise weiterverarbeitet werden können. Anhand des Wertes des Defektsignals wird eine Defektmaske gebildet. An einer Korrektureinrichtung wird jedem Pixel in Abhängigkeit vom Wert der Defektmaske des Pixels entweder das Bildsignal dieses Pixels, das tiefpassgefilterte Bildsignal oder eine Kombination aus Bild- und Tiefpasssignal zugeordnet. Das Verfahren kann dadurch beschleunigt werden, dass auf ein Abspeichern der Tiefpasssignale verzichtet wird. Dies ist ohne weiteres möglich, da insbesondere bei einer Hardwarelösung die Signale parallel und fließend bearbeitet werden können.

In einer vorteilhaften Ausführungsform des Auf- oder Durchlichtscanners weist die Beleuchtungseinrichtung mehrfarbige LEDs auf. Zur Aufnahme der Bildsignale sind rote, grüne und blaue oder einfarbige LEDs vorgesehen. Zur Aufnahme des Defektsignals können LEDs in einem weiteren, visuellen Spektralbereich oder im Infraroten vorgesehen sein. Die LEDs können gleichmäßig über die Lichtquelle verteilt sein oder sie können aus mehreren Teil-Lichtquellen über Strahlkombinierer zu einer Lichtquelle vereinigt werden. Vorteilhaft an der Verwendung von LEDs ist insbesondere, dass sie sehr schnell schaltbar sind, wodurch ein mechanischer Verschluss beim Scanner eingespart werden kann.

Alternativ kann die Beleuchtungseinrichtung jedoch auch eine Weißlichtquelle aufweisen. In diesem Fall muss das weiße Licht bei einem Farbscanner jedoch in seine Farbbestandteile aufgespalten werden. Hierzu kann zwischen Beleuchtungseinrichtung und Aufnahmeeinrichtung ein Farbfilter vorgesehen sein. Möglich ist hierbei ein Filterrad, in dem verschiedene Farbfilter enthalten sind, welche bei jedem Farbscan eingeschwenkt werden. Dies bedingt jedoch, dass die Farbscans nacheinander erzeugt werden. Es wäre auch möglich, die Aufnahmeeinrichtung mit Farbfiltern, wie z. B. Mosaikfiltern, auszugestalten. Aber auch alle anderen bekannten Filteranordnungen sind hier anwendbar.

Eine weitere Möglichkeit der Farbtrennung besteht darin, die Aufspaltung von Weiß- oder mehrfarbigem Licht zwischen Bildmaterial und Aufnahmeeinrichtung vorzunehmen. Hierzu können beispielsweise Strahlteiler eingesetzt werden. Mit diesen können verschiedene Farbanteile des durch das Bildmaterial durchgetretenen Lichts auf mehrere Aufnahmeeinrichtungen geleitet werden. Dadurch ist es möglich, in einem Aufnahmeschritt gleichzeitig alle verschiedenen Farbauszüge sowie das Defektsignal aufzunehmen.

Die Bildung des Tiefpasssignals kann per Software oder per Hardware realisiert werden. Zur analogen Tiefpassfilterung ist in einem vorteilhaften Ausführungsbeispiel eine Recheneinheit vorgesehen, bei der z. B. über Mittelwertbildung ein- oder zweidimensional ein Tiefpass gebildet wird. Auch alle anderen bekannten Verfahren zur Bildung eines Tiefpasssignals sind bei diesem Verfahren einsetzbar. Besonders vorteilhaft ist es jedoch, wenn die Bildsignale von defekten Pixeln bei der Tiefpassbildung nicht berücksichtigt werden. Bildsignalwerte dieser Pixel können bei der Tiefpassbildung ausgelassen und stattdessen Werte benachbarter, nicht defekter Pixel verwendet werden.

Besonders vorteilhaft ist es jedoch, die Tiefpassfilterung mit einer Hardware-Lösung zu realisieren. Diese ist insbesondere bei Hochleistungsscannern zu bevorzugen, da sie eine sehr schnelle Bildsignalbearbeitung gewährleistet. Zur Bildung des Tiefpasses wird hier ein Rechenwerk verwendet, welches vorteilhafterweise einen zweidimensionalen Tiefpass realisiert. Auch hier sind verschiedene gängige Tiefpassbildungen einsetzbar; es ist auch mölglich, nur einen eindimensionalen Tiefpass zu verwenden. Besonders vorteilhaft ist es aber auch hier wieder, wenn Bildsignalwerte von als defekt erkannten Pixeln nicht zur Tiefpassfilterung herangezogen werden.

In einer besonders vorteilhaften Lösung ist die Signalverarbeitung derart aufgebaut, dass Bild-, Tiefpass- und Defektsignal parallel verarbeitbar sind. Während aus dem Bildsignal ein Tiefpasssignal gebildet wird, kann das Bildsignal verzögert weitergeleitet und das Defektsignal so aufbereitet werden, dass defekte Pixel, zu erhaltende Originalpixel sowie evtl. Übergangspixel im Übergangsbereich zwischen Defekt und nicht defektem Originalbild gleichzeitig (also im selben Taktschritt) zur Verfügung stehen. Der Übergangsbereich wird geschaffen, um Sprünge zwischen durch das Tiefpasssignal ersetzten Pixeln und Originalpixeln zu vermeiden. In diesem Übergangsbereich ist es besonders vorteilhaft, eine Kombination aus Bild- und Tiefpasssignal einzusetzen. Letztlich wird die Verarbeitung von Bild-, Tiefpass- und Defektsignal dadurch gewährleistet, dass beispielsweise ein Mischwerk zum Auswählen zwischen Bild-, Tiefpass- und/oder einer Kombination aus Bild- und Tiefpasssignal vorgesehen ist, welches je nach Defektwert des jeweiligen Pixels diesem einen der zwei möglichen Signalwerte oder eine Kombination derselben zuordnet.

In einem erfindungsgemäßen Bildverarbeitungsverfahren werden Bildsignale eines transparenten Bildmaterials mittels eines Aufnahmeelements - wie beispielsweise einer CCD - aufgenommen. Zusätzlich wird ein Defektsignal aufgenommen oder aus den bereits aufgenommenen Bildsignalen abgeleitet. Dieses gibt sowohl Defekte des Bildmaterials als auch der Aufnahmeeinrichtung oder der gesamten Aufnahmeoptik wieder. Es dient dem Erkennen der Position von Defekten im aufgenommenen Bildsignal. Durch Filterung werden Tiefpasssignale der Bildsignale gebildet. Diese Tiefpasssignale bzw. eine Kombination aus Bild- und Tiefpasssignal werden an den Stellen des Bildes eingesetzt, an denen aufgrund des Defektsignals die Position eines Defektes ermittelt wurde.

Da die Ausleuchtung der Aufnahmeeinrichtung bei Beleuchtung mit Licht unterschiedlicher Spektralbereiche und insbesondere das Verhalten unterschiedlicher Aufnahmeeinrichtungen, mit denen jeweils getrennt das Licht verschiedener Spektralbereiche aufgenommen wird, stark differieren kann, ist es vorteilhaft, eine Ausleuchtungskorrektur vorzunehmen. Diese kann anhand einer sogenannten Helllichtaufnahme durchgeführt werden. Dabei wird die Aufnahmeeinrichtung ohne Bildvorlage im Strahlengang ausgeleuchtet und das so aufgenommene Signal als Referenzwert verwendet.

Eine weitere, vorteilhafte Möglichkeit der Ausleuchtungskorrektur - insbesondere, wenn sich eine Bildvorlage im Strahlengang befindet - wird durch das Defektsignal ermöglicht. Das Tiefpasssignal des Defektsignal bzw. das Defektsignal selbst gibt den Verlauf der Ausleuchtung der Aufnahmeeinrichtung wieder und kann somit zur Ausleuchtungskorrektur verwendet werden.

Das Defektsignal kann durch verschiedene Methoden erzeugt werden. Es ist möglich, das Defektsignal direkt aufzunehmen, beispielsweise durch einen Infrarotscan, der zusätzlich zu den Farbscans aufgenommen wird, oder durch die Aufnahme von vom Bildmaterial weggestreuten Licht oder durch Aufnahme eines zusätzlichen Farbscans, der mit den anderen Farbscans verrechnet werden kann, um das Defektsignal abzuleiten.

Eine von den Kosten und vom baulichen Aufwand sehr günstige Lösung zur Aufnahme der Bildsignale und des Defektsignals besteht darin, für alle Signale die selbe Aufnahmeeinrichtung zu verwenden und die Aufnahmen nacheinander zu erzeugen, wobei verschiedene Spektralbereiche nacheinander abgetastet werden.

Um viele Bilder möglichst schnell aufzunehmen, ist es vorteilhaft, Bildsignale und Defektsignal mit unterschiedlichen Aufnahmeeinrichtungen aufzunehmen. Hierzu können verschiedene CCDs für jedes Signal vorgesehen werden, wobei die Signale in Abhängigkeit vom Spektralbereich durch Strahlteiler getrennt werden. Gerade, wenn unterschiedliche Aufnahmeeinrichtungen für die verschiedenen Signale verwendet werden, ist es besonders wichtig, eine Ausleuchtungskorrektur für alle Signale durchzuführen. Diese kann aber auch wichtig sein, wenn ein und dieselbe Aufnahmeeinrichtung verwendet wird, aber die Optik oder Farbfilter wellenlängenabhängige Eigenschaften haben, welche die Signale verfälschen.

Die Korrektur von als defekt erkannten Pixeln erfolgt nach einem vorteilhaften Ausführungsbeispiel dadurch, dass bei der Auswahl, ob das Bildsignal eines Pixels, dessen Tiefpasssignal oder eine Kombination aus Bild- und Tiefpasssignal verwendet wird, ein Schwellwert für das Defektsignal berücksichtigt wird. Sobald das Defektsignal diesen Schwellwert überschreitet, wird nicht mehr das Bildsignal für das Pixel verwendet, sondern das Tiefpasssignal oder eine Kombination aus Bild- und Tiefpasssignal. Eine Kombination aus Bild- und Tiefpasssignal ist insbesondere bei den im Übergangsbereich zwischen defekten und nicht defekten Pixeln liegenden Bildpunkten vorteilhaft verwendbar. Dadurch wird ein abrupter Übergang zwischen Tiefpasssignal und Bildsignal, welcher zu unangenehmen Sprüngen in der Dichte führen könnte, vermieden. Alternativ kann dieser Effekt erreicht werden, wenn für Pixel, bei denen der Wert des Defektsignals unterhalb der Schwelle liegt, ein korrigiertes Bildsignal eingesetzt wird, während bei Pixeln, deren Defektsignalwert den Schwellwert überschreitet, das Tiefpasssignal eingesetzt wird und anschließend der Übergangsbereich zwischen ausgewähltem Tiefpass- und Bildsignal durch Anwendung eines weiteren Tiefpasses geglättet wird.

Das Verfahren kann ebenso bei Zeilenscannern eingesetzt werden. Soll hier jedoch ein zweidimensionaler Tiefpass gebildet werden, so muss das eingescannte Signal immer über mehrere Zeilen abgespeichert werden. Es ist aber auch möglich, immer nur das Bildsignal einer Zeile in jeder Farbe sowie deren Defektsignal aufzunehmen, das Tiefpasssignal über die Zeile zu bilden und dieses an als defekt erkannten Positionen einzusetzen.

Das Tiefpasssignal kann - wie bereits erwähnt - bei diesem Verfahren auf unterschiedliche Arten realisiert werden. Weitere Einzelheiten und Vorteile der Erfindung ergeben sich aus der Beschreibung von Ausführungsbeispielen, die anhand der Zeichnungen eingehend erläutert werden.

Es zeigen:

Fig. 1    einen schematischen Aufbau eines Ausführungsbeispiels des erfindungsgemäßen Durchlichtscanners,

Fig. 2    ein Ablaufschema zur Durchführung des erfindungsgemäßen Verfahrens und

Fig. 3    eine schematische Darstellung einer Hardware-Lösung für das erfindungsgemäße Defektkorrekturverfahren.

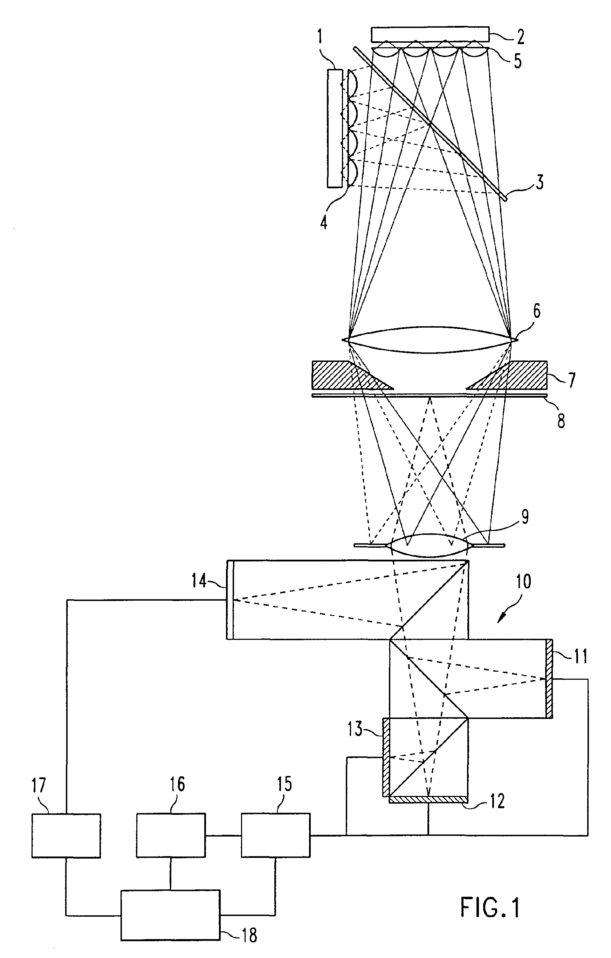

In Fig. 1 ist schematisch der Aufbau eines Ausführungsbeispiel des erfindungsgemäßen Durchlichtscanners dargestellt. Als Beleuchtungseinrichtung werden zwei mehrfarbige LED-Arrays 1 und 2 verwendet, deren Licht über einen Strahlteiler 3 zusammengeführt wird. Das LED-Array 1 ist beispielsweise aus roten und grünen LEDs aufgebaut, deren Licht durch einen vorgeschalteten Linsenarray 4 fokussiert wird. Der LED-Array 2 weist dagegen infrarote und blaue LEDs auf, deren Licht ebenfalls durch einen vorgesetzten Linsen-Array 5 fokussiert und zum Strahlteiler 3 geleitet wird. Das am dichroitischen Strahlteiler 3 zusammengeführte, mehrfarbige Licht wird mit einer Kondensorlinse 6 durch die Maske der Filmbühne 7 auf die Bildvorlage 8 geleitet. Das durch die Bildvorlage 8 durchtretende, mehrfarbige Licht wird von einer Abbildungslinse 9 auf einen Strahlteilerprismenkomplex 10 fokussiert, von dem es auf verschiedene CCD-Arrays umgelenkt wird. Dabei wird es entsprechend der jeweiligen Spektralanteile auf die jeweiligen CCD-Arrays aufgeteilt, so dass auf dem CCD-Array 11 beispielsweise der rote Farbanteil, auf dem CCD-Array 12 der grüne Farbanteil, auf dem CCD-Array 13 der blaue Farbanteil und schließlich auf dem CCD-Array 14 beispielsweise der infrarote Spektralanteil abgebildet wird. Die Farbanteile werden dann an den entsprechenden CCD-Arrays 11, 12 und 13 in Bildsignale und der Farbanteil am CCD-Array 14 in ein Defektsignal umgewandelt. Die Bildsignale werden an einer Speichereinrichtung 15 abgespeichert. An einer Recheneinheit 16 werden aus den Farbsignalen Tiefpasssignale gewonnen. Parallel dazu wird das Defektsignal in einer weiteren Recheneinheit mit angeschlossener Speichereinheit 17 mit einem Schwellwert verglichen, und die den Schwellwert überschreitenden Defektsignale werden abgespeichert oder direkt weiterverarbeitet. Die an dem Speicher bzw. den Recheneinheiten 15, 16 und 17 vorliegenden Bild-, Tiefpass- und Defektsignale werden an einer Korrektureinrichtung 18 zusammengeführt. Dabei wird jedem Pixel in Abhängigkeit vom Wert des Defektsignals dieses Pixels entweder das Bildsignal dieses Pixels oder das Tiefpasssignal des Pixels oder eine Kombination aus Bild- und Tiefpasssignal zugeordnet. Dadurch werden Pixel, die von nicht defekten Stellen des Bildes stammen, mit dem Bildsignal des Originals belegt, während defekte Stellen durch das Tiefpasssignal ersetzt werden.

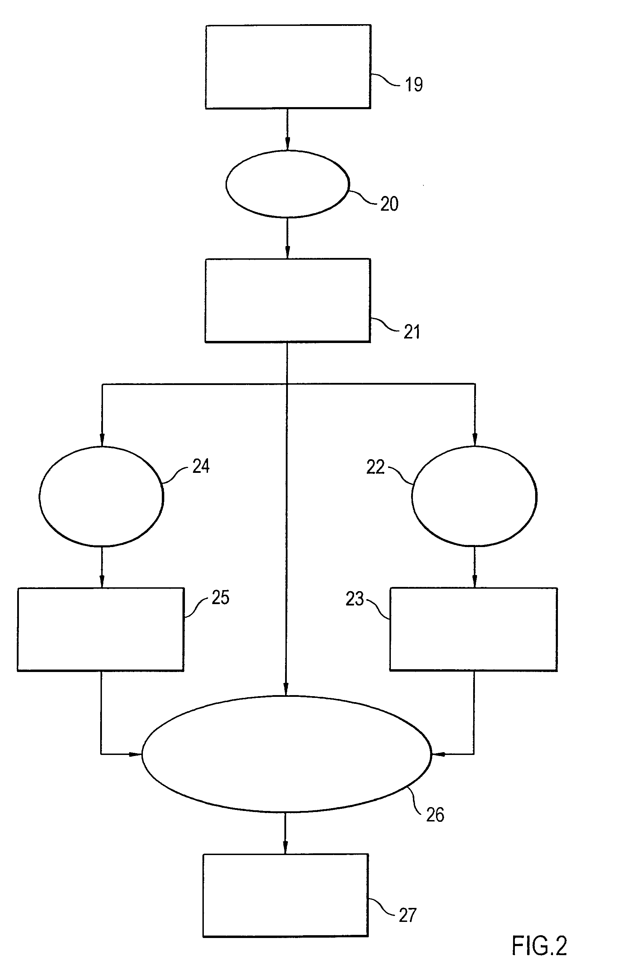

Der Ablauf dieses Korrekturverfahrens ist in Fig. 2 in einem Ablaufschema näher erläutert. Die in Schritt 19 vorliegenden Rohscandaten geben die aus den Farbkanälen für Rot, Grün und Blau sowie aus dem Defektkanal resultierenden Signale wieder. Diese Signale werden vor der weiteren Bearbeitung erst einmal einer Scannerkorrektur 20 unterzogen, bei der beispielsweise Ausleuchtungskorrekturen, Verzerrungskorrekturen oder Korrekturen anderer Zuordnungsfehler vorgenommen werden. Nach der Korrektur ergeben sich in Schritt 21 bereinigte Daten in Rot, Grün, Blau sowie in einem Defektkanal, beispielsweise im Infraroten. Die Daten werden nun verschiedenen Bearbeitungsschritten zugeführt. Zum einen werden die Farbkanaldaten in Schritt 22 einer Tiefpassfilterung unterzogen, aus der in Schritt 23 das Tiefpassbild in Rot, Grün und Blau resultiert. Anhand des scannerkorrigierten Defektbildes wird in Schritt 24 eine Bestimmung der Defektpixel vorgenommen. Diese ergeben sich durch Vergleich der Defektwerte mit einem Schwellwert. Je nachdem, ob nur stärkere Defekte oder möglichst auch geringe Defekte korrigiert werden sollen, wird der Schwellwert höher oder tiefer angesetzt. Sollen auch geringe Defekte korrigiert werden, kann der Schwellwert nahezu entsprechend dem mittleren Defektsignal an einer Nichtdefekt-Stelle (im Idealfall gegen Null) gesetzt werden. Hierzu ist es jedoch wünschenswert, dass die Ausleuchtungskorrektur möglichst optimal realisiert wurde. Aus der Bestimmung der Defektpixel ergeben sich in Schritt 25 die Positionen der im eingescannten Bild enthaltenen Defekte. In einem Korrekturschritt 26 wird schließlich jedem Pixel der Bilddaten ein korrigiertes Bildsignalpixel zugeordnet. Dieses wird außerhalb der in Schritt 25 vorliegenden Defektpositionen gleich den in Schritt 21 vorliegenden, korrigierten Bilddaten gesetzt. An den in Schritt 25 ermittelten Defektpositionen wird dem korrigierten Bildwert entweder das in Schritt 23 gebildete Tiefpasssignal oder eine Kombination dieses Tiefpasssignals und des in Schritt 21 ermittelten Farbsignals zugeordnet. Nachdem dieser Schritt für alle Pixel des Bildes vorgenommen wurde, ergeben sich in Schritt 27 die defektkorrigierten Bilddaten für Rot, Grün und Blau für den gesamten Scan der Bildvorlage. Als Kombination von Tiefpasssignal und Farbsignal kann in Schritt 26 beispielsweise eine Linearkombination aus Tiefpass- und Farbsignal benutzt werden. Es ist vorteilhaft, die Wichtung der jeweils zu addierenden Anteile in Abhängigkeit von ihrer Lage relativ zum Defekt vorzunehmen, so dass im Zentrum eines Defektes hauptsächlich der Tiefpassanteil eingesetzt wird, wogegen im Übergangsbereich zwischen defekten und nicht defekten Pixeln Tiefpasssignal und Farbsignale etwa gleich gewichtet eingehen und schließlich bei nicht defekten Pixeln nur das Farbsignal verwendet wird. Hierzu kann ein von den Kratzerpositionen abhängiger Faktor $\alpha$ gebildet werden.

Dieser kann auch die Stärke oder Breite der Defekte berücksichtigen. Durch dieses Vorgehen kann ein fließender Übergang zwischen korrigiertem Defekt und Originalbild gewährleistet werden.

Die Bildsignalwerte eines korrigierten Pixels ergeben sich dann beispielsweise aus einer Linearkombination der gewichteten Bildsignale und der gewichteten Tiefpasssignale dieser Bildsignale zu:

$$(R, G, B)_{korr} = (1-\alpha)^{.} (R, G, B) + \alpha^{.} TP (R, G, B).$$

Dieses im Ablaufschema der Fig. 2 gezeigte Defektkorrekturverfahren kann besonders vorteilhaft in einer Hardwarelösung realisiert werden.

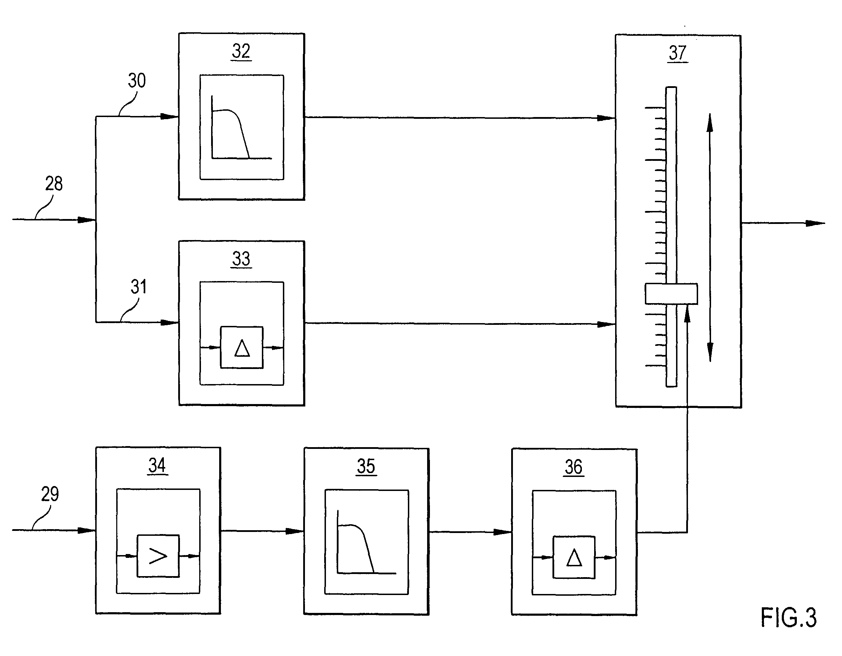

Eine vorteilhafte Hardware-Lösung für ein erfindungsgemäßes Defektkorrekturverfahren wird anhand von Fig. 3 beschrieben. Um eine besonders schnelle Verarbeitung zu gewährleisten, werden die Bildsignale auf einem ersten Signalpfad 28 und parallel dazu die Defektsignale auf einem zweiten Signalpfad 29 verarbeitet. Die Bildsignale werden wiederum parallel in den Signalpfaden 30 und 31 einer zweidimensionalen Tiefpassbildung im Bearbeitungsschritt 32 unterzogen, während dieselben Bildsignale auf einem zweiten Signalpfad 31 um die für die Tiefpassbildung erforderliche Rechenzeit in einem Schritt 33 verzögert werden. Damit ergeben sich nach den Bearbeitungsschritten 32 und 33 parallel zur gleichen Zeit auf dem Signalpfad 30 ein unscharfes Bildsignal und auf dem Signalpfad 31 das verzögerte, ursprüngliche Bildsignal. Auf dem Signalpfad 29 wird das Defektsignal in einem Bearbeitungsschritt 34 mit einem Schwellwert verglichen, so dass sich nach dem Schwellwertvergleich ein die Defektposition charakterisierendes Signal ergibt. Dieses ausgewählte Defektsignal wird vorteilhafterweise in einem Bearbeitungsschritt 35 tiefpassgefiltert, so dass gewissermaßen eine Verbreiterung der erkannten Defekte erfolgt. Diese Verbreiterung dient dazu, den bereits erwähnten Übergangsbereich zwischen mittels des Tiefpasses korrigiertem Defektbild und Originalbild zu schaffen. Das verbreiterte Defektbild wird nun in einem Verzögerungsschritt 36 zeitlich mit dem bearbeiteten Bildsignal abgestimmt, so dass sich unscharfes Bildsignal, Original-Bildsignal und Defektsignal eines Pixels jeweils im selben Takt befinden. Diese drei Werte werden nun gemeinsam an einem Mischer 37 verarbeitet, indem sie anteilig addiert werden. Anhand des Wertes des Defektsignals eines Pixels wird der Anteil von Bildsignal bzw. Tiefpasssignal eines Pixels bestimmt und als korrigiertes Bildsignal dieses Pixels ausgegeben.

Die zweidimensionale Tiefpassbildung in Schritt 32 bzw. 35 kann jeweils hardwaremäßig in einem Rechenwerk erfolgen. Auf diese Art und Weise läßt sich das gesamte Defektkorrekturverfahren hardwaremäßig realisieren. Alle Bildsignalbearbeitungsschritte können parallel erfolgen, und es muss nur immer genau ein Pixel bearbeitet werden, ohne dass dieses mit benachbarten Pixeln korreliert werden muss. Somit ist eine optimal schnelle Bearbeitung des Bildes möglich.

Die dargestellte Hardwarelösung stellt natürlich nur eine Möglichkeit der Bildverarbeitung dar. Es ist ebenso möglich, beispielsweise auf den Schritt 35, die Ausweitung des Defektes, zu verzichten und nach der Korrektur der Bildsignale eine Tiefpassfilterung des Übergangsbereichs zwischen Defektpixeln und nicht defekten Pixeln vorzunehmen. Es ist auch möglich, an der Position der als defekt erkannten Pixel nur das Tiefpasssignal und an den Positionen von als nicht defekt erkannten Pixeln das reine Bildsignal ohne Vermischung einzusetzen.

**Patentansprüche**

1. Auf- oder Durchlichtscanner mit

   - einer Beleuchtungseinrichtung zum Beleuchten von Bildmaterial,
   - einem Träger zum Halten des Bildmaterials,
   - einer Aufnahmeeinrichtung zum Aufnehmen des vom Bildmaterial reflektierten oder durch das Bildmaterial durchtretenden Lichts und zur pixelweisen Umwandlung des Lichts in elektrische Signale,
   wobei Bildsignale in mehreren Farben und ein Defektsignal erzeugbar sind,
   - einer Speichereinrichtung zum pixelweisen Abspeichern von Bild- und Defektsignalen,
   - einer Recheneinrichtung zum Erzeugen von Tiefpasssignalen aus den Bildsignalen,
   - einer Korrektureinrichtung zum Auswählen zwischen Bildsignal und Tiefpasssignal oder einer Kombination aus Bild- und Tiefpasssignal eines Pixels in Abhängigkeit von dem Wert des Defektsignals des entsprechenden Pixels.

2. Auf- oder Durchlichtscanner nach Anspruch 1, wobei die Beleuchtungseinrichtung ein- oder mehrfarbige LEDs aufweist.

3. Auf- oder Durchlichtscanner nach Anspruch 1, wobei die Beleuchtungseinrichtung eine Weißlichtquelle aufweist.

4. Auf- oder Durchlichtscanner nach Anspruch 3, wobei zwischen Beleuchtungseinrichtung und Aufnahmeeinrichtung Farbfilter vorgesehen sind.

5. Auf- oder Durchlichtscanner nach Anspruch 2 oder 3, wobei zwischen Bildmaterial und den Aufnahmeeinrichtungen Strahlteiler angeordnet sind.

6. Auf- oder Durchlichtscanner nach Anspruch 1, 2 oder 3, wobei mehrere Aufnahmeeinrichtungen vorgesehen sind.

7. Auf- oder Durchlichtscanner nach Anspruch 1, wobei zur Bildung der Tiefpasssignale ein Rechenwerk vorgesehen ist.

8. Auf- oder Durchlichtscanner nach Anspruch 7, wobei parallele Signalpfade für Bildsignal, Tiefpasssignal und Defektsignal vorgesehen sind.

9. Auf- oder Durchlichtscanner nach Anspruch 8, wobei ein Mischwerk zum Auswählen zwischen Bildsignal, Tiefpasssignal oder einer Kombination aus Bild- und Tiefpasssignal vorgesehen ist.

10. Bildverarbeitungsverfahren mit den Schritten

    - Aufnehmen von Bildsignalen eines Bildmaterials,
    - Aufnehmen und/oder Bilden eines Defektsignals von Defekten des Bildmaterials und/oder der Aufnahmeeinrichtung,
    - Bilden von Tiefpasssignalen der Bildsignale,
    - pixelweises Korrigieren der Bildsignale durch Auswählen zwischen Bildsignal, Tiefpasssignal oder einer Kombination aus Bildsignal und Tiefpasssignal, wobei das Defektsignal als Auswahlkriterium dient.

11. Bildverarbeitungsverfahren nach Anspruch 10, wobei eine Ausleuchtungskorrektur von aufgenommenen Signalen durchgeführt wird.

12. Bildverarbeitungsverfahren nach Anspruch 11, wobei die Ausieuchtungskorrektur durch Abgleich mit einer Helllichtaufnahme durchgeführt wird.

**13.** Bildverarbeitungsverfahren nach Anspruch 11, wobei die Ausleuchtungskorrektur anhand des Tiefpasssignals des Defektsignals erfolgt.

**14.** Bildverarbeitungsverfahren nach Anspruch 10, wobei das Defektsignal durch Aufnahme eines zusätzlichen Bildsignals und Verrechnen dieses Bildsignals mit den anderen Bildsignalen erzeugt wird.

**15.** Bildverarbeitungsverfahren nach Anspruch 10, wobei das Defektsignal durch Aufnahme von infrarotem Licht gebildet wird.

**16.** Bildverarbeitungsverfahren nach Anspruch 10, wobei Bildsignale und Defektsignal mit derselben Aufnahmeeinrichtung aufgenommen werden.

**17.** Bildverarbeitungsverfahren nach Anspruch 10, wobei Bildsignale und Defektsignal mit unterschiedlichen Aufnahmeeinrichtungen aufgenommen werden.

**18.** Bildverarbeitungsverfahren nach Anspruch 17, wobei Bildsignale und Defektsignal bezüglich unterschiedlicher Eigenschaften der Aufnahmeeinrichtungen korrigiert werden.

**19.** Bildverarbeitungsverfahren nach Anspruch 10, wobei bei der Auswahl ein Schwellwert für das Defektsignal berücksichtigt wird.

**20.** Bildverarbeitungsverfahren nach Anspruch 19, wobei für Pixel, bei denen der Wert des Defektsignals oberhalb des Schwellwertes liegt, das Tiefpasssignal oder eine Kombination aus Bildsignal und Tiefpasssignal eingesetzt wird.

**21.** Bildverarbeitungsverfahren nach Anspruch 20, wobei für Pixel, bei denen der Wert des Defektsignals unterhalb des Schwellwertes liegt, ein korrigiertes Bildsignal eingesetzt wird.

**22.** Bildverarbeitungsverfahren nach einem der vorhergehenden Ansprüche, **dadurch gekennzeichnet, dass** auf Stellen im Übergangsbereich zwischen ausgewählten Tiefpasssignalen und Bildsignal ein weiterer Tiefpass angewandt wird.

**23.** Bildverarbeitungsverfahren nach Anspruch 10, **dadurch gekennzeichnet, dass** Tiefpasssignale durch gleitende Mittelwertbildung erzeugt werden.

**24.** Bildverarbeitungsverfahren nach Anspruch 10, **dadurch gekennzeichnet, dass** Tiefpasssignale zweidimensional erzeugt werden.

**25.** Bildverarbeitungsverfahren nach Anspruch 10, **dadurch gekennzeichnet, dass** bei der Bildung des Tiefpasssignals Bildsignale von Pixeln, deren Defektsignalwert oberhalb eines Schwellwertes liegt, übersprungen werden.

FIG.1

FIG.2

FIG.3